# EUROPEAN PATENT SPECIFICATION

(11) **EP 2 823 246 B1**
(45) Date of publication and mention of the grant of the patent: **09.12.2015**
(21) Application number: 13706003.4
(22) Date of filing: 25.02.2013
(51) Int. Cl.: F28D 1/03, F28D 20/02, B60H 1/00

(54) **HEAT EXCHANGER WITH TWO REFRIGERANTS**
WÄRMETAUSCHER MIT ZWEI KÄLTEMITTELN
ÉCHANGEUR DE CHALEUR AVEC DEUX RÉFRIGÉRANTS

(30) Priority: 06.03.2012 EP 12158224
(43) Date of publication of application: 14.01.2015
(73) Proprietor: MAHLE International GmbH, 70376 Stuttgart (DE)
(72) Inventor: BERGER, Thierry, F-57100 Thionville (FR); BIVER, Philippe, L-4804 Rodange (LU)
(74) Representative: BRP Renaud & Partner mbB Rechtsanwälte Patentanwälte Steuerberater
(86) International application number: PCT/EP2013/053713
(87) International publication number: WO 2013/131772

(56) References cited:
- EP-A1- 1 930 681
- US-A1- 2011 154 855
- US-A1- 2011 239 696

## Description

### TECHNICAL FIELD

The present invention relates to a heat exchanger according to the preamble of claim 1 having phase change material interposed between each flat tube of the heat exchanger, and to a method of manufacturing such heat exchangers.

### BACKGROUND OF THE INVENTION

Heat exchangers typically comprise a plurality of interconnected parallel flat tubes in-between which corrugated fins are brazed, a refrigerant flowing in the flat tubes. To enable cooling when the engine of a hybrid vehicle stops, a new generation of heat exchangers has been developed comprising containers filled with a phase change material [PCM] such as wax and arranged in thermal contact with the fins. In US 2010/0313587 A1 Wolfe et al. disclose such a new heat exchanger.

Inside the containers, internal fins are arranged in order to facilitate the thermal transfer from the periphery of the container to the heart of it.

When the engine runs, the refrigerant circulates cooling the fins and air flowing through them, and cooling as well the PCM so it solidifies. When the engine stops, the refrigerant stops circulating and so the PCM heats up and liquefies restituting the stored cold to the fins and to the air flow pursuing cooling the vehicle interior.

The new heat exchanger, as presented in US 2011/0239696 A1, is a stack of shaped and holed metal sheets placed face to face by pair. The stack is brazed in a furnace and the components are joined together. The flat tubes create a leak-free circuit within which the refrigerant flows. The PCM is placed and retained inside leak-free containers in optimum heat transfer contact with the flat tubes and the fins. The refrigerants and the PCM do not mix. An alternative presented in US2011-154855A1 teaches an evaporator having flow tubes and a flat cool storage material arranged on one side only of each flow tube. The evaporater corresponds to the preamble of claim 1.

During the brazing operation the flux melts and the overall stack length decreases by few millimeters jeopardizing the correct sealing of the heat exchanger. Indeed, on one hand each flat tube must be in intimate contact with the next flat tube for creating the refrigerant circuit and on the other hand, the containers have to be in contact with the flat tubes for enabling thermal transfer. Both conditions may not be satisfied resulting in multiple end-of-line checks and leak testing.

### SUMMARY OF THE INVENTION

Accordingly, it is an object of the present invention to provide a solution to this problem by proposing a leak free heat exchanger for an air conditioning system according to claim 1.

The container is provided with a width adjusting mean so the thermal contact with the flat tubes is optimized.

In a first embodiment, the first peripheral wall is outwardly inclined so slightly widening as extending from the first main wall and, the second peripheral wall is inwardly inclined so slightly reducing as extending from the second main wall. In a further embodiment, the second peripheral wall has substantially a U-shape comprising a foot portion perpendicularly extending from the second main wall, continued in an outwardly curved portion making almost a half-turn, ended in a straight final portion extending from the curve to a distal edge, the final section being inclined and slightly widening as extending from the curve to the distal edge. All embodiments enable a mutual male-female engagement enabling adjustment of the width of the container.

The inclination of the first and second peripheral wall, relative to the transverse axis is inferior to 20 degrees. The angle of inclination has to ease the first and second peripheral engagement but it has to be small enough so the width adjustment can take place as one wall will slide relative to the other one.

Generally the heat exchanger comprises a plurality of interposed interconnected containers enabling to fill all containers by pouring the phase change material in the liquid state in only one of them. More particularly, the flat tubes interconnect with each other along a transverse direction and, the containers interconnect with each other via a passage that extends through the flat tubes along the same transverse direction.

In a plate heat exchanger, the flat tube is the assembly of a pair of long shaped metal sheets, the plates, arranged face to face and joined together along there perimeter so defining an interior volume within which the first fluid may flow. More precisely, the tubes and containers are joined by brazing.

More precisely, the PCM which for instance can be a wax absorbs energy and solidifies when being cooled by the refrigerant that circulates inside the flat tubes and restores the energy and liquefies when the refrigerant does not circulate.

The invention is also about a method for manufacturing a heat exchanger for an air conditioning system according to claim 9.

Forming an inclined second peripheral wall, comprise the step of: forming the second peripheral wall with a substantially U-shape having a foot portion continued in an outwardly curved portion making almost a half-turn and ended in a straight final portion extending from the curve to a distal edge, the final section being inclined A and slightly widening as extending from the curve to the distal edge.

Providing a container may further comprise the step of providing internal fins which have a free height larger than the internal dimension of the container and arranging them inside the container so to be in thermal contact with the container. The internal fins are typically made in thin aluminium corrugated strip and there shape self-adapt to the internal dimension of the container without resisting to the width adjustment of the container.

For making a multi tube, multi containers heat exchanger the step of stacking-up the flat tubes and the containers should be repeated so the stack comprises a plurality of tubes and interposed containers.

### BRIEF DESCRIPTION OF THE DRAWINGS

The present invention is now described by way of example with reference to the accompanying drawings in which:
Figure 1 is an isometric view of a plate heat exchanger as per the invention.
Figure 2 is a section of the heat exchanger of Figure 1 along a profile plan passing between two flat tubes.
Figure 3 is an isometric view of a container of the heat exchanger of Figures 1, 2.
Figure 4 is a detail of the container of Figure 3.
Figures 5 is a horizontal section of the heat exchanger of Figure 1.

### DESCRIPTION OF THE PREFERRED EMBODIMENTS

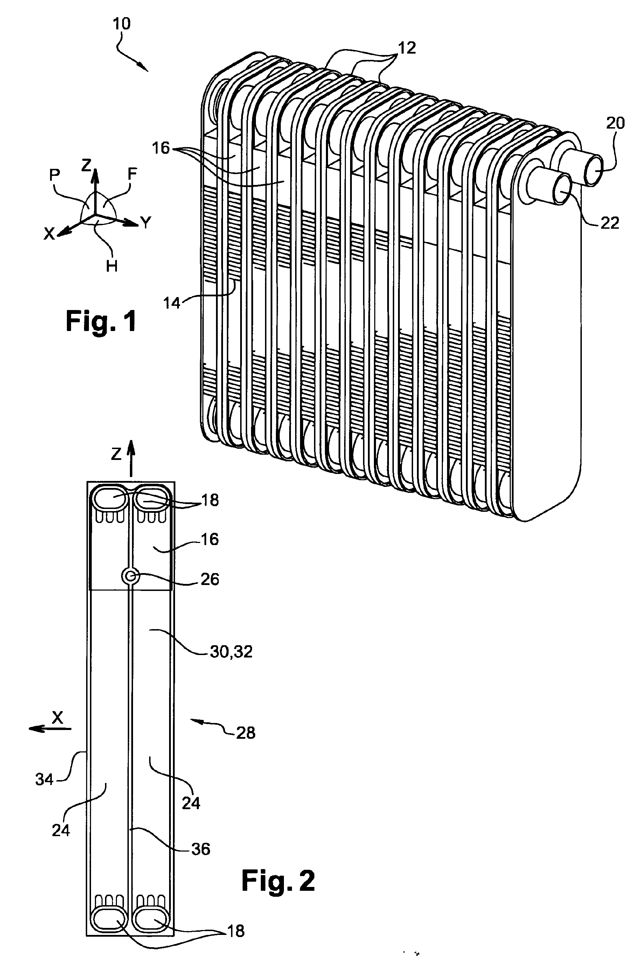

In Figure 1 a plate heat exchanger 10 as per the invention is represented and positioned in a tri-axial system, longitudinal axis X, transverse axis Y and vertical axis Z. The heat exchanger 10 comprises a plurality of flat tubes 12 in-between which are arranged corrugated fins 14 and flat containers 16.

To ease the description and without any intent to limit the scope of the invention the following vocabulary are utilized in reference to the vertical orientation Z as shown on Figure 1 : "bottom", "top" "over" "under" "above" "below". Also, "facial" F designates the plan normal to the longitudinal axis X, "profile" P designates the plan normal to the transverse axis Y and "horizontal" H designates the plan normal to the vertical axis Z. Furthermore, the adjective "flat" qualifies the tubes 12 and the containers 14 both having plane, or flat, surfaces in the profile plan P. These flat surfaces enable a large area of contact between the tubes 12 and the fins 14 and between the tubes 12 and the containers 16 so maximizing the heat transfer between them.

The containers 16 are placed in the vicinity of the extremity of the tubes 12 as indicated on the profile section of Figure 2. The flat tubes 12 are interconnected through four communication holes 18 aligned in the transverse direction Y making four parallel connecting passages throughout the length of the heat exchanger 10. Inside the heat exchanger 10, a refrigerant flows from an inlet 20 to an outlet 22 in following a flow circuit 24 inside the tubes 12 transferring from tube to tube via the communication holes 18.

The interposed containers 16 are interconnected though a transverse connecting hole 24 creating a passage for a phase-change-material (PCM). The PCM does not normally circulate and it remains still inside the containers 16. The containers' interconnection 26 is only utilized when filling the PCM by pouring in only one container 16 then transferring to the other containers 16. The refrigerant and the PCM do not mix as the flow circuit 24 and the containers 16 are independent.

The PCM typically liquefies above 5°C and solidifies below 5°C. This 5°C threshold should only be viewed as an example, not a limitation. In other applications another value, such as 2°C or 10°C, may be chosen. When filling the containers at room temperature, the PCM is liquid. Wax is an example of such PCM.

The description is limited to plate heat exchangers having, such as on Figure 1, one container between each pair of tubes. Alternative embodiments, for instance with two containers between each pair of tubes, are easily accessible to the person skilled in the art. In such alternative embodiment the corrugated fins are limited to the central area between the containers. Also, embodiments where the containers are independently filled and thus are not interconnected can also be derived from the present description.

As visible on Figure 2, the communication passage 26 between the containers extends through the flat tubes 12 and consequently the flat tubes 12 are provided with four communication holes 18 for the flow circuit 24 and one orifice 26, or passage, for the containers' interconnection.

A possible alternative is to extend the container upward so that the communication holes 18 extend through the containers. This is sketched on Figure 2 where the contour of the container goes over two communication holes 18.

To constitute the flat tubes 12, long metal sheets 28 are formed and shaped so having a concave area 30 with a flat bottom 32.

Throughout the description, the adjective "long" qualifies the metal sheets of the flat tubes, referring to a much lengthier vertical dimension than along the two other axes. "Short" will also be utilized qualifying the metal sheets for making the containers that, as sketched on Figure 2, have a much shorter vertical dimension than the "long" sheets.

The perimeter 34 of the long sheets 28 remains plane and each of the four inter-tubes communication hole is surrounded by a surface outwardly protruding from the concave area 30. The inter-containers passage 26 is operated in the central area and is also surrounded by a plane surface.

The concave area 30 corresponds to the intra-tube flow circuit 24. Numerous alternatives of flow circuit geometry exist and to illustrate the description the embodiment chosen, as visible on Figure 2, corresponds to a pair of parallel vertical channels, the refrigerant flowing from the inlet 20 through all the left channels then flowing back toward the outlet 22 via all the right channels. The two channels are separated by a median border 36 that locally surrounds the orifice 26 for the containers' interconnection. Anyway, the present invention is independent of the flow circuit geometry.

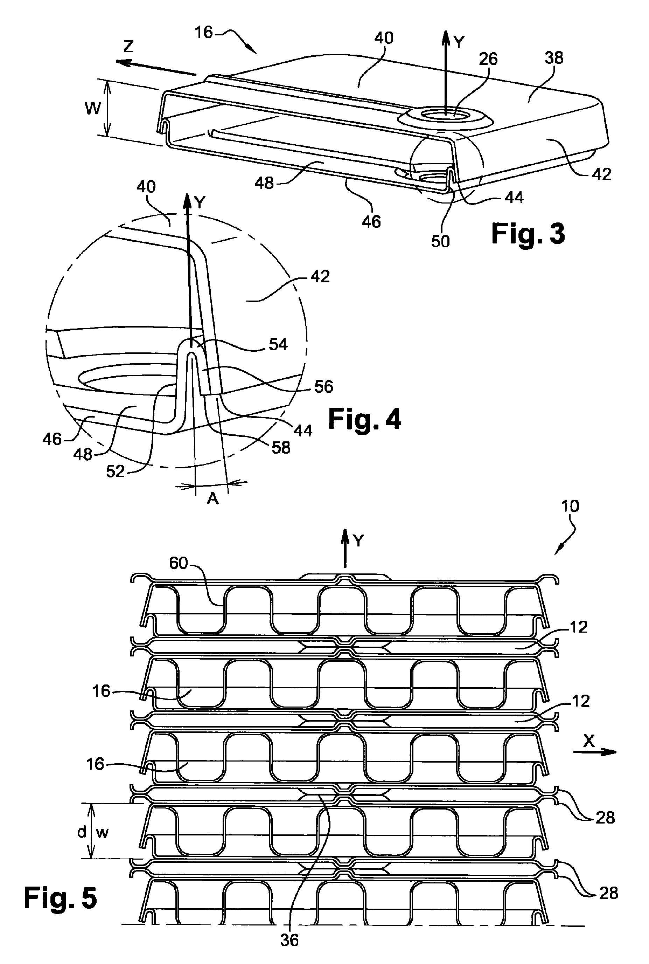

Referring now to Figure 3 and the detail of Figure 4, the structure of the flat containers 16 is described. Each container 16 is the arrangement of two formed short metal sheets assembled in a male-female complementary engagement like a box and its cover.

The first short metal sheet 38 has a first flat main wall 40 surrounded by an outwardly inclined first peripheral wall 42 extending up to a first distal edge 44. Relative to the transverse axis Y, that is perpendicular to the first main wall 40, the inclination A of the first wall 40 is inferior to 20° degrees.

A second short metal sheet 46 has a second flat main wall 48 surrounded by a second peripheral wall 50 that comprises three portions: a foot portion 52 extending perpendicularly to the second main wall 48 and followed by an outwardly curved portion 54 making almost a U-turn and continued by a final straight portion 56, extending to a second distal edge 58. Relative to the transverse axis Y, that is perpendicular to the second main wall 48, the inclination A of the final straight portion 56 is inferior to 20° degrees.

To interconnect the containers 16, holes are arranged in the first main wall 40 and in the second main wall 48.

As shown on Figure 4, the inclination A of the first and of the second peripheral wall enables a complementary engagement of the first and second short sheets. The first peripheral wall 42 overlaps the second peripheral wall 50 so the first peripheral wall 42 and the final straight portion 56 of the second peripheral wall 50 are in surface contact edge 44 to edge 58.

Multiple alternatives can be developed for forming the first and second short sheets making the containers. The key factor is to enable the overlap male-female engagement. For instance the second short sheet could, instead of a U-shape peripheral wall, be provided with a one-leg inwardly inclined shot wall, that would match the inclination of the first wall.

As shown on Figure 5, the plate heat exchanger 10 is finally assembled as the stack of alternating long and short pair of metal sheets. In view of the brazing operation the metal sheets and the fins 14 are covered with brazing flux. A first pair of long sheets 28 is arranged face-to-face, concave areas 30 facing each other so defining the interior volume of the tube 12. A pair of short sheets 38, 46, is then arranged in like box and cover as detailed above. Internal fins 60 are arranged inside the containers in contact with the inner surface of the first short sheet 38 and the inner surface of the second short sheet 46. The inner fins 60 provide a thermal transfer path from the wall of the container 16 to the heart of it, improving the efficiency of the PCM either solidifying or liquefying. For this purpose, the internal fins 60 are typically made material that transfer heat easily such as aluminium. Other possibilities exist.

The connection hole 26 of the container 16 is set aligned to the passage operated in the long sheets 28. A further pair of long sheets 28 is arranged so the container 16 is now between two flat tubes 12. The four communication holes 18 of the first tube must be aligned and in contact with the four communication holes of the second tube. The assembly of the heat exchanger 10 continues alternating tubes 12 and containers 16 until the last tube 12.

The described stack provides a first contact between the tubes via their respective four communication holes 18, and a second contact between the containers 16 via the connection holes 26, and a third contact between the tube 12 and the containers 16 via the flat walls 32, 40, 48.

When joined by brazing in a furnace the flux present on the metal sheets and on the fins melts and the overall length of the stack slightly decreases. To ensure a good quality joining and a leak proof assembly it is essential that the length variation gets compensated. The overlap of the first 40 and second 46 short metal sheets enables the male-female engagement to adjust so the width w of the container 16 measured over the main walls 40, 48, along the transverse axis Y exactly equals to the inter-tube distance d. Also, the inner fins 60 are made in thin strip and they easily adapt in shape so they do not resist to the containers' width adjustment during brazing. For instance, prior to being assembled inside the containers 16, the internal fins 60 have a free height that is slightly larger than the internal width of the container 16. They may, for instance, be provided with a rounder profile than when inside the container as shown on Figure 5. So, when closing the container 16 the profile of the internal fins 60 self-adapts to a more square shape in contact with both sides of the container 16 providing optimum thermal contact with the container and, in doing so, optimum heat transfer to the PCM.

Thanks to this automatic width adjustment the three imperative contacts are ensured without creating internal strength and the brazing operation can perfectly join all the parts.

## Claims

1. A heat exchanger (10) for an air conditioning system, the heat exchanger (10) comprising plurality of parallel flat tubes (12) interconnected so that a refrigerant fluid is able to circulate inside the flat tubes (12) transferring from one to the other until exiting the heat exchanger (10) and comprising at least one container (16) interposed between two adjacent flat tubes (12) and in thermal contact with said adjacent flat tubes (12), a phase change material being arranged in the container (16),
the container (16) being provided with width adjusting means (42, 56) so the thermal contact with the flat tubes (12) is optimized and wherein,
the container (16) comprises a first part having a first main wall (40) surrounded by a first peripheral end wall (42) and a second part having a second main wall (48) surrounded by a second peripheral end wall (50), the first and the second end walls overlapping so the width (w) of the container (16) measured over the two main walls (40, 48) is adjustable to the distance (d) between the two flat tubes (12) optimizing the thermal contact between the container (16) and the flat tubes (12), **characterized in that**
the first and the second peripheral end walls (42, 50) have complementary inclined (A) surfaces (42, 56) for a mutual male-female engagement enabling adjustment of the width (w) of the container (16).

2. A heat exchanger (10) as set in claim 1 wherein the first peripheral wall (42) is outwardly inclined so slightly widening as extending from the first main wall (40) and,
the second peripheral wall (50) has substantially a U-shape comprising a foot portion (52) perpendicularly extending from the second main wall (48), continued in an outwardly curved portion (54) making almost a half-turn, ended in a straight final portion (56) extending from the curve (54) to a distal edge (58), the final section (56) being inclined (A) and slightly widening as extending from the curve (54) to the distal edge (58) for mutual male-female engagement enabling adjustment of the width (w) of the container (16).

3. A heat exchanger (10) as set in any of the claims 1 or 2 wherein the inclination (A) of the first and second peripheral wall, relative to the transverse axis (Y) is inferior to 20 degrees.

4. A heat exchanger (10) as set in any of the preceding claims further comprising a plurality of interconnected containers (16) enabling to fill all containers by pouring the phase change material in the liquid state in only one of them.

5. A heat exchanger (10) as set in claim 4 wherein the flat tubes (12) interconnect with each other along a transverse direction (Y) and, the containers (16) interconnect with each other via a passage that extends through the flat tubes (12) along the transverse direction (Y).

6. A heat exchanger (10) as set in any of the preceding claims wherein internal fins (60) are arranged inside the container in thermal contact with the first and the second main walls (40, 48), the dimension of the internal fins (60) self-adjusting to the width adjustment of the container (16).

7. A heat exchanger (10) as set in any of the preceding claim wherein the tubes (12) and containers (16) are joined by brazing.

8. A heat exchanger (10) as set in any of the preceding claim wherein the phase change material absorbs energy and solidifies when the refrigerant circulates and restores the energy and liquefies when the refrigerant does not circulate.

9. Method for manufacturing a heat exchanger (10) for an air conditioning system, the method comprising the steps of:
- providing a plurality of flat tubes (12) able to be in fluid connection with each other,
- providing at least one container (16) having a width adjusting mean (42, 56) so as to be interposed between two adjacent flat tubes (12) and to be in thermal contact with them,
- spraying brazing flux on the flat tubes (12) and on the container (16),
- stacking the flat tubes (12) and the container (16) interposing the container between adjacent flat tubes,
- ensuring the overall length of the stack is slightly longer than the desired length of the finished heat exchanger (10),
- brazing the stack, the flux melting and the adjusting mean (42, 56) of the container enabling the stack to slightly adjust to the desired length,
- forming in a short flat metal sheet (38) a concave area (40) with a flat bottom surrounded by an inclined (A) peripheral end wall (42),
- forming in a second short flat metal sheet (46) a concave area (48) with a flat bottom surrounded by a inclined (A) second peripheral wall (50) complementary to the end wall (42),
- forming, in each short metal sheet (38, 46), a connecting hole surrounded by a surface outwardly protruding from the concave area.
- forming a container (16) by arranging the short metal sheets (38, 46) face to face so the flat bottoms are distant from each other so, the concave areas defining an interior volume for the container (16), and the inclined end walls (42, 50) engaging in a male-female complementary match, the connecting holes outwardly protruding from the container (16).

10. Method as set in claim 9 wherein the steps of forming in a second short flat metal sheet (46) an inclined second peripheral wall (50), comprise the step of:
- forming the second peripheral wall (50) with a substantially U-shape having a foot portion (52) continued in an outwardly curved portion (54) making almost a half-turn and ended in a straight final portion (56) extending from the curve (54) to a distal edge (58), the final section (56) being inclined (A) and slightly widening as extending from the curve (54) to the distal edge (58).

11. Method as set in any of the claim 9 to 10 wherein the step of providing a container (16) comprises the step of:
- providing internal fins (60) having a free height larger than the internal dimension of the container,
- arranging the internal fins (60) inside the container (16) so to be in thermal contact with the container (16), the shape of the internal fins (60) self-adapting to the internal dimension of the container (16).

12. Method as set in any of the claims 9 to 11 wherein the step of stacking-up the flat tubes (12) and the containers (16) is repeated so the stack comprises a plurality of tubes (12) and interposed containers (16).

## Patentansprüche

1. Wärmeaustauscher (10) für ein Klimatisierungssystem, wobei der Wärmeaustauscher (10) mehrere parallele flache Rohre (12) umfasst, die so miteinander verbunden sind, dass ein Kühlmittelfluid im Inneren der flachen Rohre (12) zirkulieren kann, während es von einem zu dem anderen übergeht, bis es den Wärmeaustauscher (10) verlässt, und wenigstens einen Behälter (16) umfasst, der zwischen zwei benachbarten flachen Rohre (12) angeordnet ist und in einem thermischen Kontakt mit den benachbarten flachen Rohren (12) steht, wobei in dem Behälter (16) ein Phasenübergangsmaterial angeordnet ist,
wobei der Behälter (16) mit einem Breitenanpassungsmittel (42, 56) versehen ist, damit der thermische Kontakt mit den flachen Rohren (12) optimiert wird, und wobei
der Behälter (16) einen ersten Teil mit einer ersten Hauptwand (40), die von einer ersten Umfangsendwand (42) umgeben ist, und einen zweiten Teil mit einer zweiten Hauptwand (48), die von einer zweiten Umfangsendwand (50) umgeben ist, umfasst, wobei die erste und die zweite Endwand so überlappen, dass die über die beiden Hauptwände (40, 48) gemessene Breite (w) des Behälters (16) an den Abstand (d) zwischen den beiden flachen Rohren (12) anpassbar ist, wodurch der thermische Kontakt zwischen dem Behälter (16) und den flachen Rohren (12) optimiert wird, **dadurch gekennzeichnet, dass**
die erste und die zweite umfängliche Endwand (42, 50) komplementär geneigte (A) Flächen (42, 56) für einen gegenseitigen Steckeingriff aufweisen, wodurch die Anpassung der Breite (w) des Behälters (16) ermöglicht wird.

2. Wärmeaustauscher (10) nach Anspruch 1, wobei die erste Umfangswand (42) so auswärts geneigt ist, dass sie sich mit dem Verlauf der ersten Hauptwand (40) geringfügig erweitert, und
die zweite Umfangswand (50) im Wesentlichen eine U-Form aufweist, die einen Fußabschnitt (52) umfasst, der sich senkrecht von der zweiten Hauptwand (48) erstreckt, sich in einem auswärts gebogenen Abschnitt (54) fortsetzt, welcher beinahe eine Halbdrehung ausführt, und in einem geraden Endabschnitt (56) endet, der sich von der Biegung (54) zu einem distalen Rand (58) erstreckt, wobei der Endabschnitt (56) geneigt (A) ist und sich mit seinem Verlauf von der Biegung (54) zu dem distalen Rand (58) für den gegenseitigen Steckeingriff, der die Anpassung der Breite (w) des Behälters (16) ermöglicht, geringfügig erweitert.

3. Wärmeaustauscher (10) nach einem der Ansprüche 1 oder 2, wobei die Neigung (A) der ersten und der zweiten Umfangswand in Bezug auf die Querachse (Y) geringer als 20 Grad ist.

4. Wärmeaustauscher (10) nach einem der vorhergehenden Ansprüche, ferner umfassend mehrere verbundene Behälter (16), die ermöglichen, dass durch das Gießen des Phasenübergangsmaterials in dem flüssigen Zustand in nur einen davon alle Behälter gefüllt werden.

5. Wärmeaustauscher (10) nach Anspruch 4, wobei die flachen Rohre (12) entlang einer Querrichtung (Y) miteinander in Verbindung stehen, und die Behälter (16) über einen Durchgang, der sich entlang der Querrichtung (Y) durch die flachen Rohre (12) erstreckt, miteinander in Verbindung stehen.

6. Wärmeaustauscher (10) nach einem der vorhergehenden Ansprüche, wobei im Inneren des Behälters innere Rippen (60) in einem thermischen Kontakt mit der ersten und der zweiten Hauptwand (40, 48) angeordnet sind, wobei sich die Abmessung der inneren Rippen (60) selbst an die Breitenanpassung (16) des Behälters (16) anpasst.

7. Wärmeaustauscher (10) nach einem der vorhergehenden Ansprüche, wobei die Rohre (12) und Behälter (16) durch Hartlöten verbunden sind.

8. Wärmeaustauscher (10) nach einem der vorhergehenden Ansprüche, wobei das Phasenübergangsmaterial Energie absorbiert und sich verfestigt, wenn das Kühlmittel zirkuliert, und die Energie wiederherstellt und sich verflüssigt, wenn das Kühlmittel nicht zirkuliert.

9. Verfahren zur Herstellung eines Wärmeaustauschers (10) für ein Klimatisierungssystem, wobei das Verfahren die folgenden Schritte umfasst:
- Bereitstellen mehrerer flacher Rohre (12), die in der Lage sind, miteinander in einer Fluidverbindung zu stehen,
- derartiges Bereitstellen wenigstens eines Behälters (16) mit einem Breitenanpassungsmittel (42, 56), dass er zwischen zwei benachbarten flachen Rohren (12) angeordnet ist und damit in einem thermischen Kontakt steht,
- Sprühen eines Hartlötflussmittels auf die flachen Rohre (12) und den Behälter (16),
- Stapeln der flachen Rohre (12) und des Behälters (16), wobei der Behälter zwischen benachbarten flachen Rohren angeordnet wird,
- Sicherstellen, dass die Gesamtlänge des Stapels geringfügig länger als die erwünschte Länge des fertiggestellten Wärmeaustauschers (10) ist,
- Hartlöten des Stapels, wobei das Flussmittel schmilzt und das Anpassungsmittel (42, 56) des Behälters (16) eine geringfügige Anpassung des Stapels an die gewünschte Länge ermöglicht,
- Bilden eines konkaven Bereichs (40) mit einem flachen Boden, der von einer geneigten (A) Umfangsendwand (42) umgeben ist, in einem kurzen flachen Metallblech (38),
- Bilden eines konkaven Bereichs (48) mit einem flachen Boden, der durch eine geneigte (A) zweite Umfangsendwand (50), die zu der Endwand (42) komplementär ist, umgeben ist, in einem zweiten kurzen Metallblech (46),
- Bilden einer Verbindungsöffnung, die durch eine Fläche, welche von dem konkaven Bereich auswärts vorspringt, umgeben ist, in jedem kurzen Metallblech (38, 46),
- Bilden eines Behälters (16) durch derartiges zueinander gewandtes Anordnen der kurzen Metallbleche (38, 46), dass die flachen Böden voneinander entfernt sind, so dass die konkaven Bereiche ein Innenvolumen für den Behälter (16) definieren und die geneigten Endwände (42, 48) in einer komplementären Steckentsprechung miteinander eingreifen, wobei die Verbindungsöffnungen von dem Behälter (16) nach außen vorspringen.

10. Verfahren nach Anspruch 9, wobei die Schritte des Bildens einer geneigten zweiten Umfangswand (50) in einem zweiten kurzen flachen Metallblech (46) den folgenden Schritt umfassen:
- Bilden der zweiten Umfangswand (50) mit einer im Wesentlichen U-förmigen Form, die einen Fußabschnitt (52) aufweist, der sich in einem auswärts gebogenen Abschnitt (54) fortsetzt, welcher beinahe eine Halbdrehung ausführt, und in einem geraden Endabschnitt (56) endet, der sich von der Biegung (54) zu einem distalen Rand (58) erstreckt, wobei der Endabschnitt (56) geneigt (A) ist und sich mit seinem Verlauf von der Biegung (54) zu dem distalen Rand (58) geringfügig erweitert.

11. Verfahren nach einem der Ansprüche 9 bis 10, wobei der Schritt des Bereitstellens eines Behälters (16) die folgenden Schritte umfasst:
- Bereitstellen innerer Rippen (60), die eine freie Höhe aufweisen, welche größer als die Innenabmessung des Behälters ist,
- derartiges Anordnen der inneren Rippen (60) in dem Behälter (16), dass sie in einem thermischen Kontakt mit dem Behälter (16) stehen, wobei sich die Form der inneren Rippen (60) selbst an die Innenabmessung des Behälters (16) anpasst.

12. Verfahren nach einem der Ansprüche 9 bis 11, wobei der Schritt des Aufstapelns der flachen Rohre (12) und der Behälter (16) so wiederholt wird, dass der Stapel mehrere Rohre (12) und dazwischen angeordnete Behälter (16) umfasst.

## Revendications

1. Échangeur de chaleur (10) pour un système d'air conditionné, l'échangeur de chaleur (10) comprenant une pluralité de tubes plats parallèles (12) interconnectés de façon à ce qu'un fluide réfrigérant puisse circuler à l'intérieur des tubes plats (12) en transférant de l'un à l'autre jusqu'à la sortie de l'échangeur de chaleur (10) et comprenant au moins un récipient (16) intercalé entre deux tubes plats adjacents (12) et en contact thermique avec les tubes plats adjacents (12), un matériau à changement de phase étant agencé dans le récipient (16),
le récipient (16) étant doté de moyens d'ajustement de largeur (42, 56) de façon à optimiser le contact thermique avec les tubes plats (12) et dans lequel,
le récipient (16) comprend une première partie présentant une première cloison principale (40) entourée d'une première paroi d'extrémité périphérique (42) et une seconde partie présentant une seconde paroi principale (48) entourée d'une seconde paroi d'extrémité périphérique (50), les première et seconde parois d'extrémité se chevauchant, ce qui fait que la largeur (w) du récipient (16) mesurée sur les deux parois principales (40, 48) est ajustable à la distance (d) entre les deux tubes plats (12) optimisant le contact thermique entre le récipient (16) et les tubes plats (12), **caractérisé en ce que**
les première et seconde parois d'extrémité périphérique (42, 50) présentent des surfaces complémentaires (42, 56) inclinées (A) pour un engagement mâle-femelle mutuel permettant d'ajuster la largeur (w) du récipient (16).

2. Échangeur de chaleur (10) selon la revendication 1, dans lequel la première paroi d'extrémité périphérique (42) est inclinée vers l'extérieur s'élargissant ainsi légèrement à mesure qu'elle s'étend de la première paroi principale (40) et,
la seconde partie périphérique (50) a une forme essentiellement en U comprenant une partie de pied (52) s'étendant perpendiculairement de la seconde paroi principale (48), poursuivie dans une partie incurvée vers l'extérieur (54) effectuant presque un demi-tour, terminée dans une partie finale droite (56) s'étendant depuis la courbe (54) vers un bord distal (58), la section finale (56) étant inclinée (A) et s'élargissant légèrement à mesure qu'elle s'étend de la courbe (54) vers le bord distal (58) pour un engagement mâle-femelle mutuel permettant d'ajuster la largeur (w) du récipient (16).

3. Échangeur de chaleur (10) selon la revendication 1 ou 2, dans lequel l'inclinaison (A) des première et seconde parois principales, par rapport à l'axe transversal (Y), est inférieure à 20 degrés.

4. Échangeur de chaleur (10) selon l'une quelconque des revendications précédentes, comprenant en outre une pluralité de récipients (16) interconnectés permettant de remplir tous les récipients en versant le matériau à changement de phase dans l'état liquide dans seulement un seul d'entre eux.

5. Échangeur de chaleur (10) selon la revendication 4, dans lequel les tubes plats (12) s'interconnectent entre eux le long d'une direction transversale (Y) et, les récipients (16) s'interconnectent entre eux via un passage qui s'étend à travers les tubes plats (12) le long de la direction transversale (Y).

6. Échangeur de chaleur (10) selon l'une quelconque des revendications précédentes, dans lequel des ailettes intérieures (60) sont agencées à l'intérieur du récipient en contact thermique avec les première et seconde parois principales (40, 48), la dimension des ailettes intérieures (60) s'auto-ajustant à l'ajustement de largeur du récipient (16).

7. Échangeur de chaleur (10) selon l'une quelconque des revendications précédentes, dans lequel les tubes (12) et les récipients (16) sont joints par brasage.

8. Échangeur de chaleur (10) selon l'une quelconque des revendications précédentes, dans lequel le matériau à changement de phase absorbe l'énergie et se solidifie lorsque le réfrigérant circule, et restitue l'énergie et se liquéfie lorsque le réfrigérant ne circule pas.

9. Procédé de fabrication d'un échangeur de chaleur (10) pour un système d'air conditionné, le procédé comprenant les étapes de :
- fournir une pluralité de tubes plats (12) capables d'être en connexion fluide entre eux,
- fournir au moins un récipient (16) présentant un moyen d'ajustement de largeur (42, 56) de façon à être intercalé entre deux tubes plats adjacents (12) et d'être en contact thermique avec eux,
- pulvériser un flux de brasage sur les tubes plats (12) et sur le récipient (16),
- empiler les tubes plats (12) et le récipient (16) en intercalant le récipient entre des tubes plats adjacents,
- garantir que la longueur totale de la pile est légèrement plus longue que la longueur souhaitée de l'échangeur de chaleur (10) terminé,
- braser la pile, le flux fondant et le moyen d'ajustement de largeur (42, 56) du récipient permettant à la pile de s'ajuster légèrement à la longueur souhaitée,
- former dans un film métallique plat court (38), une partie concave (40) avec un fond plat entourée d'une paroi d'extrémité périphérique (42) inclinée (A),
- former dans un second film métallique plat court (46), une partie concave (48) avec un fond plat entourée d'une seconde paroi périphérique (50) inclinée (A) complémentaire de la paroi d'extrémité périphérique (42),
- former, dans chaque film métallique court (38, 46), un trou de liaison entouré par une surface en saillie vers l'extérieur depuis la zone concave,
- former un récipient (16) en agençant les films métalliques courts (38, 46) face à face de façon à ce que les fonds plats soient distants l'un de l'autre de façon à ce que les zones concaves définissent un volume intérieur pour le récipient (16), et les parois d'extrémité inclinées (42, 50) s'engagent dans un appariement complémentaire mâle-femelle, les trous de liaison faisant saillie vers l'extérieur depuis le récipient (16).

10. Procédé selon la revendication 9, dans lequel les étapes de formation d'une seconde paroi périphérique (50) inclinée dans un second film métallique plat court (46) comprend l'étape de :
- former une seconde paroi périphérique (50) essentiellement en U comprenant une partie de pied (52) poursuivie dans une partie incurvée vers l'extérieur (54) effectuant presque un demi-tour et terminée dans une partie finale droite (56) s'étendant depuis la courbe (54) vers un bord distal (58), la section finale (56) étant inclinée (A) et s'élargissant légèrement à mesure qu'elle s'étend de la courbe (54) vers le bord distal (58).

11. Procédé selon l'une quelconque des revendications 9 et 10, dans lequel l'étape de fournir un récipient (16) comprend l'étape de :
- fournir des ailettes intérieures (60) présentant une hauteur libre supérieure à la dimension intérieure du récipient,
- d'agencer les ailettes intérieures (60) à l'intérieur du récipient (16) de façon à être en contact thermique avec le récipient (16), la forme des ailettes intérieures (60) s'auto-adaptant à la dimension intérieure du récipient (16).

12. Procédé selon l'une quelconque des revendications 9 à 11, dans lequel l'étape d'empiler les tubes plats (12) et les récipients (16) est répétée de façon à ce que la pile comprenne une pluralité de tubes (12) et de récipients intercalés (16).
